# EUROPEAN PATENT APPLICATION

(11) **EP 2 587 819 A2**
(43) Date of publication of application: **01.05.2013**
(21) Application number: 12186797.2
(22) Date of filing: 01.10.2012
(51) Int. Cl.: H04N 13/04

(54) **Timing controller with video format conversion, method therefor and display system**

(30) Priority: 31.10.2011 TW 100139656
(71) Applicant: Chimei InnoLux Corporation, Miao-Li County (TW); Innocom Technology (Shenzhen) Co., Ltd., Shenzhen City 518109 (CN)
(72) Inventor: Tsai, Yung-Yu, 350 Chu-Nan Miao-Li County (TW); Shen, Wei-Chih, 350 Chu-Nan, Miao-Li County (TW)
(74) Representative: 2K Patentanwälte Blasberg Kewitz & Reichel

(57) **Abstract**

A method for a timing controller with video format conversion is provided. The method includes steps of: receiving a control signal indicating a two-dimensional (2D) or three-dimensional (3D) display mode, and outputting a 2D or 3D output video signal in response to the control signal by a timing controller coupled between a display panel module and a display control unit. The outputting step includes: outputting the 2D output video signal in response to the control signal indicating the 2D display mode, and outputting the 3D output video signal by a 3D data format conversion unit in response to the control signal indicating the 3D display mode.

## Description

### BACKGROUND

### Field of the Invention

The invention relates in general to a timing controller, and more particularly to a timing controller with video format conversion, a method therefor and a display system.

### Description of the Related Art

A conventional liquid crystal display (LCD) system includes a system board and a timing control board. The system board is a front-end core of the display system and is extensively implemented in large-scale integrations. A main processing unit in the system board is a system-on-chip (SoC), which integrates various video interfaces including a high definition multimedia interface (HDMI), a video decoder and a scaler into an integrated chip serving as a core chip.

Current display technology, e.g., the flat-panel display technology, can be categorized into two-dimensional (2D) and three-dimensional (3D) display systems. In order to implement a display system that fulfills 2D and 3D display requirements, it is necessary that the system board of a conventional display system be redesigned to provide video signals compliant to a target format of a 3D display panel. The system board needs to further satisfy specific standards of a timing controller board compliant to the target format, so as to provide timing control signals to the 3D display panel by the timing controller board to drive the 3D display panel for 3D display.

For example, there are two types of 3D display panels supporting the frame sequential format and line alternative format, respectively. Thus, two different system board circuits need to be provided in order to implement the two kinds of display systems utilizing the two types of 3D display panels.

As a result, the overall display system structure is made complicated and inconvenient to manufacture such that the cost of the overall 3D display system is increased. However, the increased cost not only disfavors the manufacturing but also hinders the promotion and public acceptance of the 3D display system.

### SUMMARY

The invention is directed to a timing controller with video format conversion, a method for a timing controller and a display system. A 3D display system can be implemented by using a timing controller with video format conversion according to an embodiment, thus reducing the complexity of the system circuit complexity of the display system.

According to an aspect of the present invention, a timing control unit is provided. The timing control unit may be included in a control system for a display system having a two-dimensional (2D) display mode and a three-dimensional (3D) display mode. The timing control unit is for receiving a digital video signal, and outputting a 2D output video signal or a 3D output video signal, in response to a first control signal indicating the 2D display mode or the 3D display mode, wherein the first control signal included in a control signal. The timing control unit includes a 3D data format conversion unit, and outputs the 3D output video signal by the 3D data format conversion unit in response to the first control signal indicating the 3D display mode.

According to an aspect of the present invention, a display system is provided. The display system, which may be included in or regarded as a control system, has a two-dimensional (2D) display mode and a three-dimensional (3D) display mode. The display system includes a display control unit and a timing control unit. The display control unit receives a video source, generates a digital video signal, and outputs a control signal. The control signal includes a first control signal indicating the 2D display mode or 3D display mode. The timing control unit, coupled to the display control unit, receives the digital video signal and outputs a 2D output video signal or a 3D output video signal in response to the control signal. The timing control unit includes a 3D data format conversion unit, and outputs the 3D output video signal by the 3D data format conversion unit in response to the first control signal indicating the 3D display mode.

According to another aspect of the present invention, a timing controller with video format conversion is provided. The timing controller is for use in a display panel having a 2D display mode and a 3D display mode. The timing controller includes an input signal switch unit and a 3D data format conversion unit. The input signal switch unit includes an input terminal, at least one first output terminal and at least one second output terminal. The first output terminal of the input signal switch unit is coupled to an output terminal of the timing controller. The 3D data format conversion unit is coupled between the at least one second output terminal of the input signal switch unit and the output terminal of the timing controller. The input signal switch unit receives a control signal. The control signal includes a first control signal indicating a 2D display mode or a 3D display mode. When the first control signal indicates the 2D display mode, the input signal switch unit outputs an input signal from the first output terminal. When the first control signal indicates the 3D display mode, the input signal switch unit outputs an input signal from the at least one second output terminal to the 3D data format conversion unit for display. The timing controller may be included in a control system for a display system having the 2D display mode and the 3D display mode.

According to another aspect of the present invention, a timing control unit of a display is provided. The timing control unit includes the foregoing timing controller and a timing control module. The timing controller is disposed on the timing control module. The timing control module provides a timing control signal and a 3D output signal to a display panel. The timing control unit may be included in a control system for a display system having the 2D display mode and the 3D display mode.

According to yet another aspect of the present invention, a method for a timing control unit is provided. The method includes the following steps. A control signal is received. The first control signal indicates a 2D display mode or a 3D display mode. In response to the control signal, a 2D output video signal or a 3D output video signal is outputted by a timing control unit. The timing control unit is coupled between a display panel module and a display control unit. The step of outputting the 2D or 3D output video signal includes the following steps. In response to the first control signal indicating the 2D display mode, a 2D output video signal is outputted; in response to the first control signal indicating the 3D display mode, a 3D output video signal is outputted by a 3D data format conversion unit according to the second control signal.

The above and other aspects of the invention will become better understood with regard to the following detailed description of the preferred but non-limiting embodiments. The following description is made with reference to the accompanying drawings.

### BRIEF DESCRIPTION OF THE DRAWINGS

FIG. 1 shows a block diagram of a display system utilizing a timing controller with data format conversion according to one embodiment.

FIG. 2 is a block diagram of a timing controller according to one embodiment.

FIG. 3A is a diagram illustrating a coupling relationship between an input signal switch unit and a 3D data format conversion unit.

FIG. 3B is a block diagram of a coupling relationship of a 3D data format conversion unit according to one embodiment.

FIG. 4 is a flowchart of a method for a timing control unit with 2D and 3D display modes according to one embodiment.

### DETAILED DESCRIPTION

Embodiments of a timing controller, a method therefor and a display system are described below. In one embodiment, a display system for a timing controller with video format conversion is provided. In a 3D mode, the timing controller receives an input signal having a source format, and outputs a 3D output video signal having a target format in response to a control signal. Thus, with respect to the 3D mode, the timing controller is capable of receiving input signals of different source formats and outputting an output video signal compliant to a target format of a display module. Hence, implementing a 3D display system by using the timing controller can reduce the complexity of its system circuit. For example, a display control unit (e.g., a system board) serving as a video signal processing front end in a display panel, but not compliant to a target format required by 3D display of a 3D display panel, can employ the timing controller according to the embodiment to provide a 3D output video signal compliant to the target format to present 3D display effects by the 3D display panel.

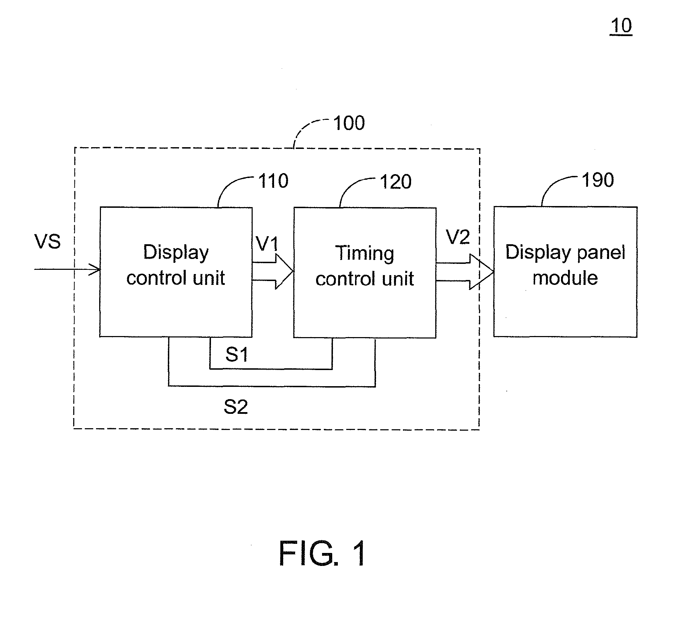

FIG. 1 shows a block diagram of a display system utilizing a timing controller with video format conversion according to one embodiment. A structure 100 of a 3D display system is provided according to this embodiment. A display system 10, e.g., a 3D LCD system based on a shutter glass or pattern retarder technology, such as a 3D LCD or television, has 2D and 3D modes and can be realized based on the structure 100 with the timing controller with video format conversion. The structure 100 includes a display control unit 110 and a timing control unit 120. The display control unit 110 receives a video source VS and generates a digital video signal V1, and outputs a control signal. The control signal includes a first control signal S1 and a second control signal S2. The first control signal S1 indicates a 2D display mode or a 3D display mode. The second control signal S2 indicates a format conversion request, e.g., indicating a request to convert a 3D video signal from one format to another format, indicating a source format of the digital video signal, or indicating a code representing a conversion request such as [1, 0] (i.e., converting to a target format of type 0 from a source format of type 1). The timing control unit 120, coupled to the display control unit 110, receives the digital video signal V1, and outputs a 2D or 3D output video signal in response to the control signal.

In response to the first control signal S1 indicating the 2D display mode, the timing control unit 120 outputs the 2D output video signal for 2D display. For example, the timing control unit 120 is implemented for detecting the 2D display mode and the 3D display mode according to the first control signal S1. When the 2D display mode is determined (e.g., when the first control signal S1 is at a low level), the timing control unit 120 converts low-voltage differential signaling (LVDS) pixel data provided by the display control unit 110 to a digital video signal, e.g., a mini-LVDS or reduce swing differential signaling (RSDS) signal to drive a data driver of a panel, so as to display a 2D picture on a display panel module 190, e.g., a 3D TFT-LCD panel.

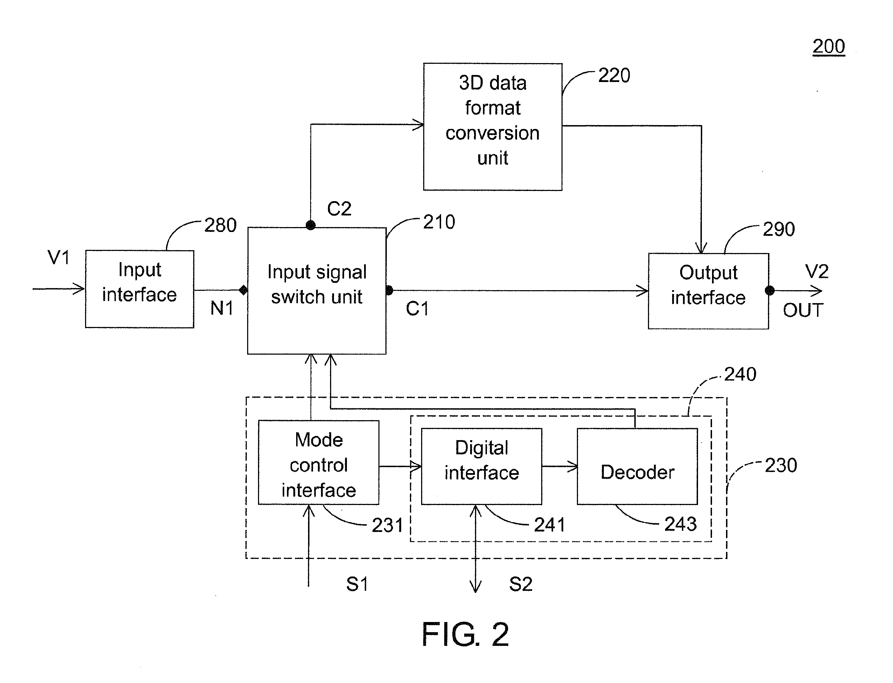

In response to the first control signal S1 indicating the 3D display mode and the second control signal S2, the timing control unit 120 outputs a 3D output video signal V2 for display in the 3D display mode. The digital video signal V1 has a source format, and the 3D output video signal V2 has a target format. For example, when the 3D display mode (e.g., the first control signal S1 is at a high level) is determined by the timing control unit 120, the timing control unit 120 performs 3D format conversion to convert the LVDS pixel data provided by the display control unit 110 to the digital video signal according to the second control signal S2, so as to display a 3D picture on the display panel module 190, e.g., a 3D TFT-LCD panel. According to an indication of the second control signal S2, the timing control unit 120 converts a source format to a target format. For example, the source format is a side-by-side, top-down, or frame-packing 3D format. For example, the target format is a frame sequential or line alternative 3D format. In an alternative embodiment, the timing control unit 120 includes a 3D data format conversion unit (as shown in FIG. 2). In response to the first control signal S1 indicating the 3D display mode, the timing control unit 120 outputs a 3D output video signal by the 3D data format conversion unit. For example, the 3D data format conversion unit converts a digital video signal to a 3D output video signal having a target format supported by the display panel module.

According to the embodiment, the display system 10 implementing the structure 100, e.g., a 3D LCD system such as a 3D LCD or television based on a shutter glass or pattern retarder technology, can reduce system circuit complexity.

In an alternative embodiment, the timing control unit 120 of the display in FIG. 1 may be implemented to include a timing control module and a timing controller. For example, the timing controller with video format conversion is implemented as an integrated circuit. The timing control module may be implemented as a circuit board, e.g., a TCON board. The timing controller may be disposed on the timing control module to provide a timing control signal and a 2D or 3D output video signal to the display panel module 190. The timing control unit 120 is substantially an interface for video transmission and control between the display control unit 110 and the display panel module 190. In addition, the timing control unit 120 can include other circuits for driving the display panel 190, e.g., a gamma correction element or a power component. A person skilled in the related art can implement the display panel 190 according to actual requirements and thus the implementation is not limiting to the above examples.

FIG. 2 shows a block diagram of a timing controller according to one embodiment. In this embodiment, a timing controller 200 includes an input signal switch unit 210 and a 3D data format conversion unit 220. The input signal switch unit 210 has an input terminal N1, at least one first output terminal C1 and at least one second output terminal C2. The first output terminal C1 of the input signal switch unit 210 is coupled to an output terminal OUT of the timing controller 200. The 3D data format conversion unit 220 is coupled between the second output terminal C2 of the input signal switch unit 210 and the output terminal OUT of the timing controller 200. When a first control signal S1 indicates a 2D display mode, the input signal switch unit 210 outputs an input signal V1 from the first output terminal C1. When a first control signal S1 indicates a 3D display mode, the input signal switch unit 210 outputs the input signal V1 from one of the at least one second output terminal C2, and the 3D data format conversion unit 220 provides a 3D output video signal for 3D display.

For example, the input signal switch unit 210 receives a control signal, wherein the control signal includes a first control signal indicating a 2D display mode or a 3D display mode. When the first control signal indicates the 3D display mode, the input signal switch unit 210 outputs the input signal from the at least one second output terminal C2 to the 3D data format conversion unit 220. In another embodiment, the control signal further includes a second control signal. When the first control signal indicates the 3D display mode, the input signal switch unit 210 outputs the input signal from one of the at least one second output terminal C2 according to the second control signal. The number of the second output terminal C2 of the input signal switch unit 210 may be one or multiple. The at least one second output terminal C2 of the input signal switch unit 210 may be coupled to the 3D data format conversion unit 220 to output the output video signal for 3D format conversion in the 3D display mode.

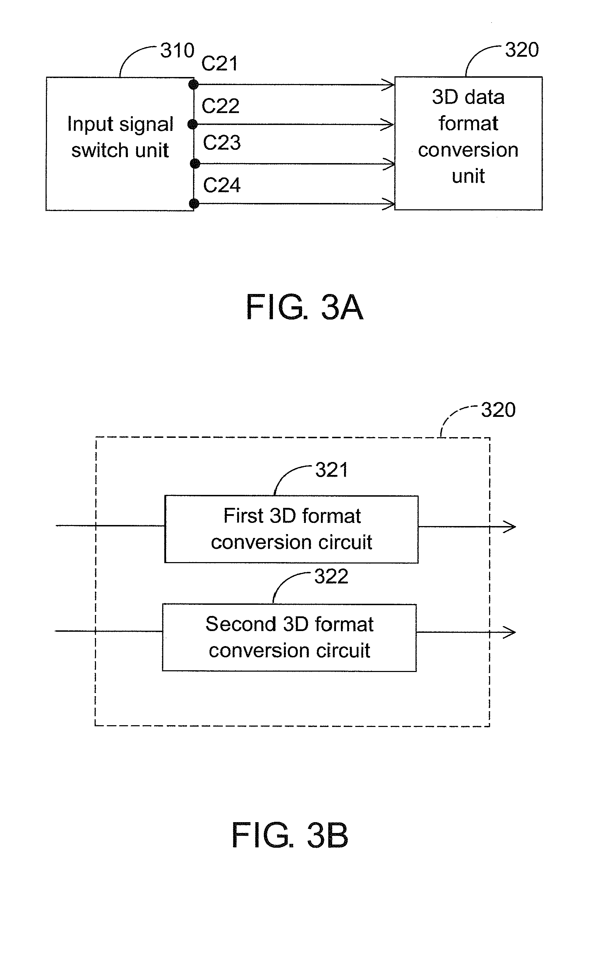

Referring to FIG. 3A showing an embodiment, when the first control signal S1 indicates the 3D display mode, the input signal switch unit 210 outputs the input signal V1 from a corresponding one of a plurality of second output terminals, e.g., C21, C22, C23 and C24, wherein the corresponding one is the second output terminal corresponding to a format conversion request (e.g., indicated by the second control signal S2). In other words, in the embodiment in FIG. 3A, multiple data channels exist between an input signal switch unit 310 and a 3D data format conversion unit 320, and each of the channels corresponds to a format conversion processing.

Referring to FIG. 3B, in one embodiment, the 3D data format conversion unit 320 includes a first 3D format conversion circuit 321 and a second 3D format conversion circuit 322. The first 3D format conversion circuit 321, coupled to one of a plurality of second output terminals, receives an input signal having a first source format (e.g., a side-by-side format) and outputs an output signal having a first target format as a 3D output signal V2, e.g., for a display apparatus supporting 3D display in the first target format (e.g., a frame sequential format). The second 3D format conversion circuit 322, coupled to another one of the second output terminals, receives an input signal having a second source format (e.g., a top-down format) and outputs an output signal having the first target format as the 3D output signal V2. In one embodiment, the 3D format conversion circuit is implemented according to format requirements of the source format and the target format. For example, the source format is a side-by-side format requiring 1080i@50/60Hz, and the target format is a frame sequential format. A frame sequential signal transmits a full-resolution picture at a speed of 120 frames per second, with the frames alternating one another. That is, the display apparatus sequentially receives a left-eye frame, a right-eye frame, a left-eye frame, a right-eye frame, and so forth. Therefore, the 3D format conversion circuits may be implemented by circuit hardware or a programmable processor according to format principles and requirements.

In one embodiment, the 3D data format conversion unit is implemented to convert an input signal having a source format of a side-by-side format, a top-down format, a frame packing format or a line alternative format to an output video signal having a target format of a frame sequential format. When the target format is a 3D frame sequential format, the frame refresh rate (e.g., 120Hz) of the 3D output signal is at least twice of the frame refresh rate of an input signal. In one embodiment, the 3D data format conversion unit is implemented to convert an input signal having a source format such as a side-by-side format, a top-down format, a frame packing format or a line alternative format to an output video signal having a target format of a line alternative format. In yet another embodiment, the 3D data format conversion unit is implemented to cover both embodiments above to provide an output video signal having a target format as a line alternative format or a frame sequential format.

In one embodiment, the input signal switch unit 210 in FIG. 1 can be realized to have one second output terminal C2. In this embodiment, the 3D data format conversion unit 220 may be implemented as shown in FIG. 3B, including an additional circuit for video signal switch to perform switching for conversion according to the second control signal. Further, an output terminal (or an input terminal) of the input signal switch unit may also represent a parallel or serial channel, and is not limited to that shown in the drawings.

In one embodiment, the timing controller 200 includes a control unit 230 for receiving a control signal so as to perform mode control and format conversion. In one embodiment, the control unit 230, coupled to the input signal switch unit 210, informs or enables the input signal switch unit 210 to output the input signal V1 from the first output terminal C1 in response to a control signal (e.g., the first control signal S1) indicating the 2D display mode. Also in response to the control signal (e.g., the first control signal S1) indicating the 3D display mode, the control unit 230 informs or enables the input signal switch unit 210 to output the input signal V1 from at least one of the second output terminals C2.

In one embodiment, the control unit 230 includes a mode control interface 231 and a format control interface 240. The mode control interface 231 receives a control signal (e.g., the first control signal S1) and informs the input signal switch unit 231 to enter either the 2D or 3D display mode. In yet another embodiment, in response to the control signal indicating the 3D display mode, the mode control interface 231 informs or activates the format control interface 240. The format control interface 240 receives a control signal (e.g., the second control signal S2) and informs the input signal switch unit 210 to perform the switching of a desired format. In one embodiment, the format control interface 240 further manages data transmission and conversion between the format control interface 240 and the display control unit 110. In one embodiment, the format control interface 240 includes a digital interface 241 and a decoder 243. For example, the digital interface 241 is implemented by a hardware interface supporting a digital interface protocol, e.g., 12C and SPI. The decoder 243 decodes the control signal received by the digital interface 241 into data, a request or a command to inform the input signal switch unit 210 to perform 3D format conversion. The above protocol may also be various types of definition. For example, 2-bit, 4-bit or other data formats are utilized for defining the format conversion. For example, 0001, 0010, 0011 and 0100 respectively represent source formats of a side-by-side format, a top-down format, a frame packing format and a line alternative format; 1000 and 1001 respectively represent target formats of a frame sequential format and a line alternative format.

The control unit 230 may be implemented according to setting and circuit requirements, and other definitions may be used instead of the examples above. For example, the first control signal S1 and the second control signal S2 may be regarded as a control signal or integrated in a control signal. For another example, the input signal switch unit 210 may directly receive a control signal rather than through an additional control unit. For another example, a same digital interface (e.g., 12C or SPI) may be utilized for transmitting and decoding a control signal.

In another embodiment based on FIG. 2, in order to meet design requirements, the timing controller 200 further includes an input interface 280 and an output interface 290 for complying with an input/output interface requirements of a front-end of rear-end circuit of the timing controller 200. For example, the input interface 280 is compliant to an LVSD interface, and the output interface 290 is compliant to a mini-LVDS/RSDS interface to drive the data driver of the panel.

In another embodiment, the control signal (e.g., S1 or S2) can be embedded in a signal stream of the input signal V1 of the input signal switch unit 210, e.g., the control signal is embedded as a header in a signal stream of the input signal V1.

In some embodiments, the timing control unit 120, the input signal switch unit 210 or the 3D data format conversion unit 220 can be implemented by a processor, a digital signal processor, or a programmable integrated circuit such as a microcontroller, a field programmable gate array (FPGA) or an application specific integrated circuit (ASIC). Further in an example, the timing control unit 120 can be integrated as an integrated circuit or integrated with other circuits into a system on chip.

In other embodiments, the timing control unit, such as the one illustrated in FIG. 1, can be included in a control system for a display system having the 2D and 3D display modes. The timing control unit is for receiving a digital video signal, and outputting a 2D output video signal or a 3D output video signal, in response to a first control signal indicating the 2D display mode or the 3D display mode, wherein the first control signal included in a control signal. The timing control unit includes a 3D data format conversion unit (such as one as illustrated above), and outputs the 3D output video signal by the 3D data format conversion unit in response to the first control signal indicating the 3D display mode. The timing control unit can further include one or more other components, such as the one or more components, units, interfaces in various embodiments according to FIG. 2, 3A, or 3B. The timing control unit may also be implemented as an integrated circuit. In further embodiments, the structure 100 or the display system 10, such as illustrated in FIG. 1, may be included in (or regarded as) a control system having the 2D and 3D display modes.

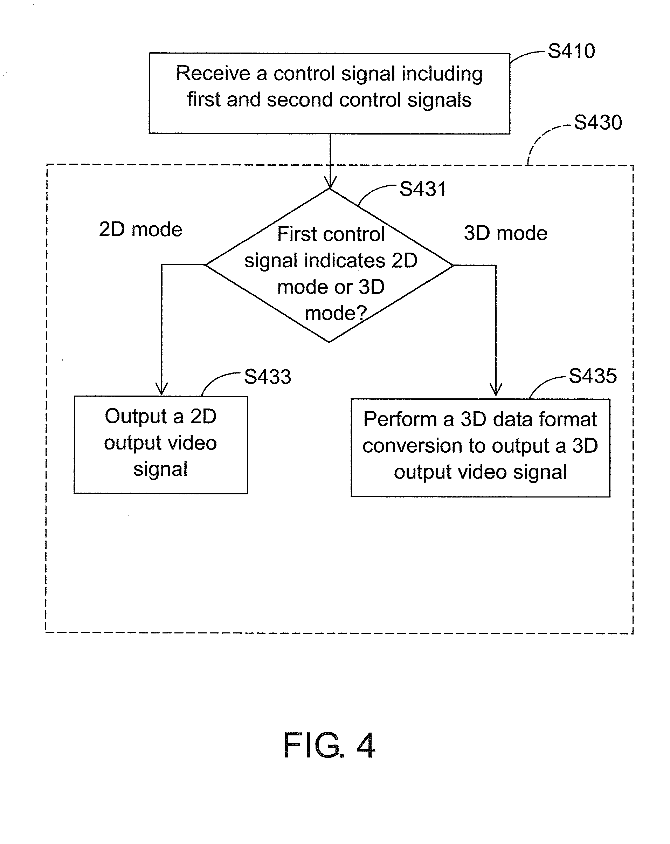

FIG. 4 shows a flowchart of a method for a timing control unit with the 2D and 3D display modes according to one embodiment. The method includes the steps below. In step S410, a control signal is received. The control signal includes a first control signal and a second control signal. The first control signal indicates a 2D display mode or a 3D display mode, i.e., a digital video signal is a 2D or 3D display mode signal. For example, the second control signal is a source format of the digital video signal. In step S430, in response to the control signal, a 2D output video signal or a 3D output video signal is outputted by a timing control unit. The timing control unit is coupled between a display panel module and a display control unit. Step S430 includes steps S431 to S435. In step S431, it is determined whether the control signal indicates the 2D mode or the 3D mode. When the control signal indicates the 2D mode, step S433 is performed. In step S433, a 2D output video signal is outputted in response to the first control signal indicating the 2D display mode, e.g., the 2D output video signal is outputted to a display panel module. When the control signal indicates the 3D mode, step S435 is performed. In step S435, in response to the first control signal indicating the 3D display mode, a 3D data format conversion is performed to output a 3D output video signal according to the second control signal, e.g., outputting the 3D output video signal by a 3D data format conversion unit. For example, the 3D data format conversion unit converts a digital video signal to a 3D output video signal having a target format supported by the display panel module. In one embodiment, when the first control signal indicates the 3D display mode, the control signal further includes the second control signal indicating the source format. In another embodiment, the first control signal indicates the 2D display mode, and the second control signal needs not indicate the source format.

In the above embodiment, for example, the target format is a frame sequential format, a line alternative format, or another format. The format conversion request may indicate a first source format. Embodiments of the target format and the source format may be referred in the description of the foregoing embodiments, and shall be omitted herein.

A timing controller, a method for a timing controller and a display system according to several embodiments are as described above. A timing controller with video format conversion is provided according to one embodiment. Thus, implementation of a 3D display system by using the timing controller can reduce system circuit complexity. For example, a display control unit (e.g., a system board) serving as a video signal processing front end in a display panel, but not compliant to a target format required by 3D display of a 3D display panel, can utilize the timing controller according to the embodiment to provide a 3D output video signal compliant to the target format to present 3D display effects by the 3D display panel.

Therefore, for a manufacturer of a 3D display system such as a display or a television, the circuit complexity of the system board is reduced to simplify the overall system structure. More specifically, even a conventional system board (e.g., a conventional SoC) that cannot directly support 3D video signals or data format conversion is still capable of controlling a timing controller with video format conversion, thereby providing an output video signal compliant to a 3D display panel for display. Such an approach will be of great convenience to the manufacturing of 3D display systems, thus resulting in reduced hardware costs.

While the invention has been described by way of example and in terms of the preferred embodiments, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A control system for a display system having a two-dimensional (2D) display mode and a three-dimensional (3D) display mode, comprising:
a timing control unit for receiving a digital video signal, and outputting a 2D output video signal or a 3D output video signal, in response to a first control signal indicating the 2D display mode or the 3D display mode, wherein the first control signal included in a control signal;
wherein the timing control unit comprises a 3D data format conversion unit, and outputs the 3D output video signal by the 3D data format conversion unit in response to the first control signal indicating the 3D display mode.

2. The control system according to claim 1, wherein a frame refresh rate of the 3D output video signal is at least twice of that of the digital video signal.

3. The control system according to claim 1 or 2, wherein the timing control unit further comprises:
an input signal switch unit, having an input terminal, at least one first output terminal, and at least one second output terminal, wherein the first output terminal of the input signal switch unit is coupled to an output terminal of the timing control unit, and the second output terminal is coupled to the 3D data format conversion unit.

4. The control system according to claim 3, wherein the control signal further comprises a second control signal; and
when the first control signal indicates the 2D display mode, the input signal switch unit outputs the digital video signal from the first output terminal; and when the first control signal indicates the 3D display mode, the input signal switch unit outputs the digital video signal from one of the at least one second output terminal according to the second control signal, and the 3D data format conversion unit provides the 3D output video signal having the target format for 3D display.

5. The control system according to claim 4, wherein the timing control unit further comprises:
a control unit, coupled to the input signal switch unit, for enabling the input signal switch unit to output the digital video signal from the first output terminal in response to the first control signal indicating the 2D display mode, and enabling the input signal switch unit to output the digital video signal from one of the at least one second output terminal in response to the first control signal indicating the 3D display mode.

6. The control system according to any one of the claims 1-5, wherein the control system is a display system, the control system further comprises:
a display control unit, for receiving a video source, generating the digital video signal and outputting the control signal.

7. The control system according to claim 6, wherein the display system further comprises:
a display panel module having the 2D and 3D display modes; and
the timing control unit, coupled between the display panel module and the display control unit, outputs the 2D output video signal or the 3D output video signal to the display panel module for 2D or 3D display in response to the control signal.

8. The control system according to any of the claims 3 to 7, wherein the 3D data format conversion unit comprises:
a first 3D format conversion circuit, coupled to one of the at least one second output terminal, for receiving an input signal having a first format and outputting an output signal having a second format as a 3D output signal.

9. The control system according to claim 8, wherein a frame refresh rate of the 3D output signal is at least twice of that of the input signal.

10. The control system according to claim 3, 4, 5, 8, or 9, wherein the timing control unit further comprises:
a timing controller including the input signal switch unit and the 3D data format conversion unit;
a timing control module;
wherein the timing controller is disposed on the timing control module, and the timing control module provides a timing control signal and a 2D or 3D output signal to the display panel.

11. A method for a timing control unit, comprising:
receiving a control signal, the control signal including a first control signal and a second control signal, the first control signal indicating a 2D display mode or a 3D display mode;
outputting a 2D output video signal or a 3D output video signal by a timing control unit in response to the control signal, wherein the timing control unit is coupled between a display panel module and a display control unit, and the outputting step including:
in response to the first control signal indicating the 2D display mode, outputting the 2D output video signal; and
in response to the first control signal indicating the 3D display mode, outputting the 3D output video signal by a 3D data format conversion unit according to the second control signal.

12. The method according to claim 11, wherein a frame refresh rate of the 3D output video signal is at least twice of that of an input signal of the timing control unit.
